# EUROPEAN PATENT APPLICATION

(11) **EP 0 947 750 A2**
(43) Date of publication of application: **06.10.1999**
(21) Application number: 99101440.8
(22) Date of filing: 27.01.1999
(51) Int. Cl.: F16K 11/052

(54) **Five-way butterfly valve**

(30) Priority: 03.04.1998 IT PD980080; 23.07.1998 IT PD980180
(71) Applicant: Cemi Piscine Service S.r.l., 30017 Lido di Jesolo (VE) (IT)
(72) Inventor: Bacco, Alessandro, 30017 Lido di Jesolo (VE) (IT)
(74) Representative: Gustorf, Gerhard, Dipl.-Ing.

(57) **Abstract**

The invention is a five-way valve for controlling and deviating the flow which is provided with a rotating butterfly device (F) closing one of the five ways (C1,C2,C3,C4,C5) and connecting the other four ways to two by two. These five ways of the new valve are not arranged in regular gaps around the valve but two of them (C3,C4) are very close, the third ducts (C1) is opposed to said two ducts and the other two ducts (C2,C5) are orthogonal to the previous ones. The butterfly device (F) rotates just with two positions into the body of the valve which is provided with a triangular holed part (F3) so as that the liquid flowing through the valve can fill the space between the holed wall and the stopper. Moreover, the butterfly device is arranged between two parallel seal plates forming a single unit with said plates. In each position the butterfly device closes by means of its triangular part one of the two parallel adjacent ducts and sets its bulkhead (F2) between the opposite duct and the opposed lateral orthogonal duct, which is closed, in order to reverse the sense of flowing of the liquid.

## Description

The present invention relates to the sector of hydraulic devices and in particular concerns a new complex valve for the deviation of water flows.

Sluice valves and two or more - way valves are being used in most waterworks. There are two and three - way valves.

In order to deviate water flows, sluice valves or two-way valves are being used with various arrangements and combinations.

Especially, the use of various valves and service ducts is required when it is necessary to deviate several flows into alternate and/or inverted common ducts and for a correct management and ducting of the flows.

In particular, said valves and ducts are being used in the field of filtration and recircling of liquids into basins combined with sand filtering tanks which can be cleaned reversing the liquid flow.

During the normal working of the filtering phase, the liquid is intaken from the basin and sent, by means of a pump, to the filter, then the liquid is reintroduced into the basin. For cleaning the filter, the liquid is intaken from the basin as well, and sent in counter-flow to the filter, removing the impurities fouled in the filter, and then the liquid is sent to sewers or to the water conditioner.

At the present, in order to carry out all these flow deviations several valves are used applied to a complex circuit.

Each valve has to be controlled one by one to allow the other maintenance operations and services to be performed; higher is the number of the valves greater is the possibility of malfunction both for the valves and for the filtering circuit; the increase in acquisition costs, assembly costs and maintenance costs is proportional to the number of valves used.

The present invention is a new five-way valve to control the flow deviation and to carry out the operation cited above.

Said new five-way valve is provided with a rotating butterfly device particularly shaped which, arranged in specific angles, closes one of the five-way and joins the other four-way two by two.

Said new valve is mainly composed of a cylindrical body inside which a butterfly device rotates controlled by an actuator.

The body of the valve has a cylindrical shape and is provided with five connection ducts which link the new valve to the feeding and discharged lines.

In particular, said five ducts of the new valve are not set radially with equal gaps around the valve, but two of said ducts are very close and preferably parallel, the third duct is opposed to said two ducts and the remaining ducts are orthogonal to the previous ducts, that is, reciprocally lined up and positioned close to the single duct.

Inside the body of the valve there is a cylindrical seat communicating with said five ducts by means of five openings on the cylindrical surface of the cylindrical seat.

Owing to the arrangement of the ducts around the valve, the openings of said ducts on the cylindrical surface have a homogeneous amplitude but not necessarily equal and consequently, the openings are sufficiently spaced out.

The rotating butterfly device set inside the cylindrical seat of the body of the new valve has a particular shape which can be a right parallelepiped having a base consisting of various geometrical shapes, that is, a central circular part, a linear radial part and a triangular part whose vertex is orientated towards the centre of the circular part and lined up with the linear part.

The circular central part is the centre of rotation of the butterfly device; the linear part is a radial baffle which is extended from the central circular part to the inner circular wall of the body of the valve; the triangular part is a sort of double baffle which is extended till the circular inner wall of the body of the valve whose amplitude can close any openings of the ducts of the body of the valve.

The ends and the edges of the butterfly device which are connected to the inner surface of the body of the valve are shaped and/or lined so as to preserve the seal of said ends and edges from the leakage of fluids.

An actuator is any device able to make the butterfly device rotate with suitable force and precision; it can be, for example, an electric motor provided with a ratio-motor.

The butterfly device is made rotate inside the body of the valve only in two positions. In each position the butterfly device closes, by means of its triangular part, one of the two parallel ducts and positions its bulkhead between the lateral duct opposite to the closed duct. In each position the liquid can flow between the lateral adjacent duct, which is open, and the opposed duct, it can even flow between the orthogonal adjacent duct opposite to the bulkhead part of the butterfly device.

In order to reduce the leakage due to the infiltration both on the lateral walls of the valve and on the surface of the valve which closes the ducts, the butterfly device is included between two parallel plates whose diameter is essentially equal the inner diameter of the valve. Between said plates there is the butterfly device which is characterised by having one or two walls of the triangular part which are drilled, and in particular it has a drilled lateral wall and a drilled wall opposite to the circular part. In this way the liquid goes into the area included between the two legs of the triangle of the butterfly device and the stopper outlined afterwards.

The edges of the two plates and the edge of the radial part of the butterfly device, which are in contact with the inner surface of the body of the valve, are adapted and/or covered so as to assure the seal of such edges and ends in case of leakage.

Moreover, on the surface of the wall of the triangular part, which is the farthest from the rotation centre of the butterfly device, there is a hollow elastic stopper adhering to the inner cylindrical surface of the central seat of the valve. Said stopper is fastened to the edges of the triangular part above mentioned. Some walls or baffles placed on the wall of the triangular part farther from the centre of the butterfly device make the stopper to adhere to the cylindrical inner surface of the rotation seat of the body of the valve.

The elastic stopper prevents the liquids from leaking through the duct which has to be closed. In fact, one of the two flows under pressure penetrates through the holes of the lateral wall and through the wall connected to the elastic stopper producing some pressure on the inner part of the diaphragm of said elastic stopper till the diaphragm itself is compressed on the cylindrical surface of the seat of the valve and consequently, on the opening of the duct to be closed.

During the working phase of the valve two parallel plates of the butterfly device as well as the hollow elastic stopper assure a greater seal against leakage.

Said two parallel plates assure the seal in case of leakage on two circular surfaces of the seat of the valve.

The following is just an example among many of the practical applications of the invention in question, illustrated in the attached table.

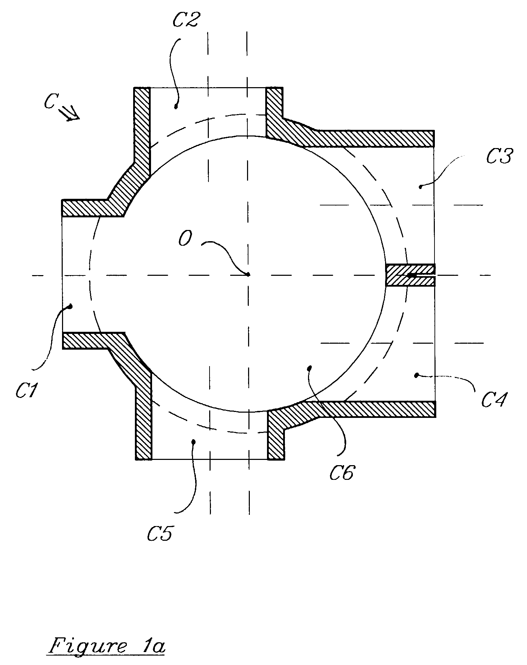

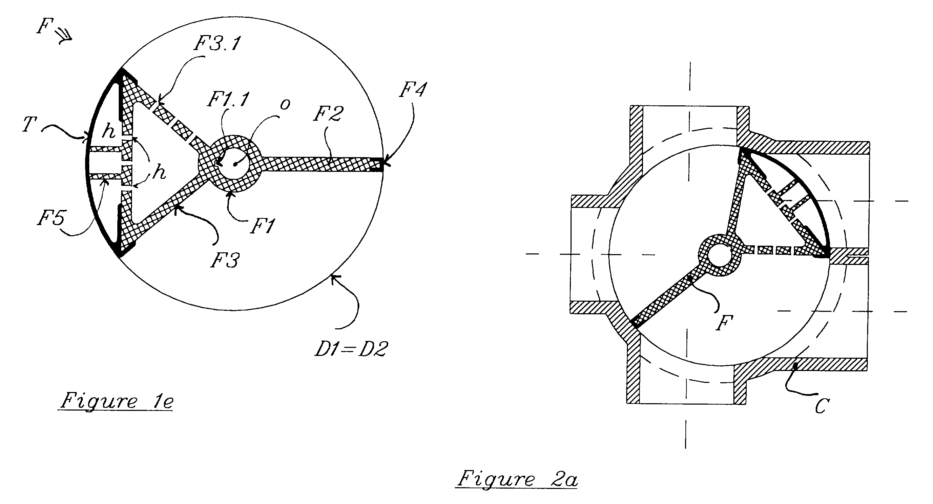

Figures 1a and 1b show a section of the body (C) and of the butterfly device (F) with their centres (o) forming the new five-way valve; the actuator is not shown.

As it can be seen in the figure, the body (C) is provided with a cylindrical seat (C6) to which ducts (C1, C2, C3, C4, C5) are connected; two of said ducts are parallel and placed side by side (C3, C4), one is opposite and radial (C1), and two (C2, C5) are orthogonal to the previous ones (C1, C3, C4), reciprocally lined up and placed near the single duct (C1).

The rotating butterfly device (F) consists of particular shapes with a central circular part (F1), a radial bulkhead part (F2) and a triangular part (F3) with a vertex turned towards the central circular part (F1) and lined up with the bulkhead part (F2). The central circular part (F1) is provided with a slot (F1.1) in order to connect the actuator to the central circular part (F1) by means of a pin.

All the surfaces and the sharp edges are faced with material for gaskets so as to assure the seal of the butterfly device.

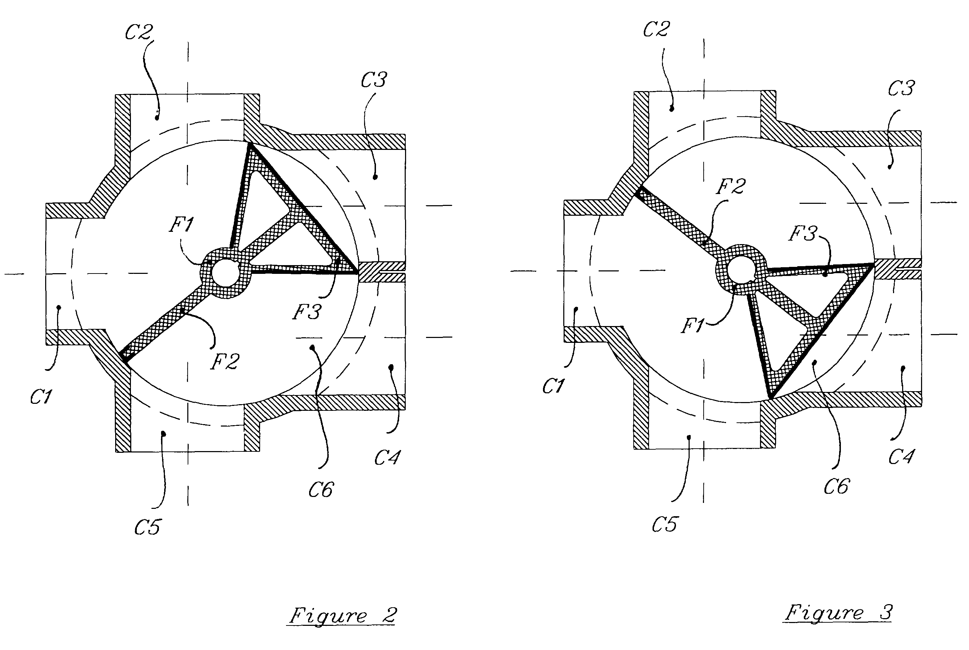

Figures 2 and 3 show two positions taken by the butterfly device (F) inside the seat (C6) of the body (C) of the new five-way valve (X).

Figure 2a shows the best solution. Two walls of the triangular part (F3) of the butterfly device (F) are holed (F3.1), particularly the lateral wall and the wall opposite to the circular part (F1).

On the surface of the wall of the triangular part (F3), which is the farthest from the rotation centre (o) of the butterfly device (F), there is an hollow elastic stopper which adheres to the cylindrical inner surface of the central seat of the valve (C6). Said stopper (T) is fastened on the edges of the triangular wall (F3) above mentioned.

The walls or baffles (F5) are set on said wall to which is connected the stopper (T) and maintain said stopper (T) in the right position even without the pressure of the liquid. The circulating water goes through the holes (F3.1), fills up the spaces (h) and compresses the stopper (T) against the wall (C7).

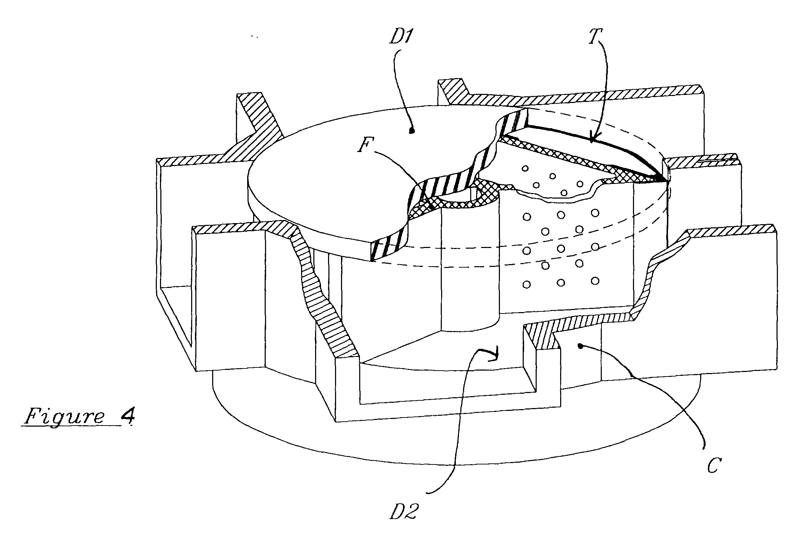

Figure 4 shows an axonometric view of the new valve in which the details described above are more visible and it shows as well the plates (D1) and (D2) which form a single unit with the butterfly device (F).

In particular, said figure shows, with a dotted line, one of the two plates (D) coupled with the butterfly device (F). The circular edge of each plate (D) is covered with material for gaskets so as to assure the seal.

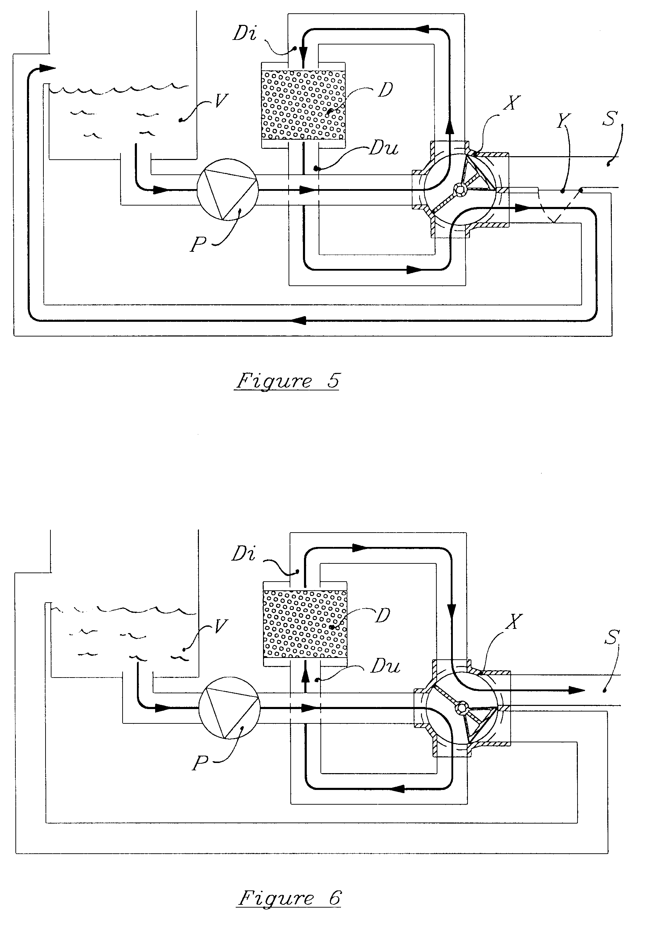

In each position the butterfly device closes, by means of its triangular part, one of the two parallel ducts positioned side by side (C3:C4), and sets its bulkhead (F2) between the opposed duct (C1) and the lateral orthogonal duct (C5:C2) opposite to the closed duct (C3:C4). Figures 5 and 6 show two working positions of the butterfly device (F) in a conditioning circuit of the liquid contained in a swimming-pool or in a basin (V). In figure 5 the liquid is taken from the basin (V) and conveyed by means of a pump (P) to the five-way valve (X) which deviates the liquid towards the entry of the purification filter (D). From the outlet (Du) of the purification filter (D) the liquid returns to the five-way valve (X) in order to be conveyed again, this time, towards the basin (V).

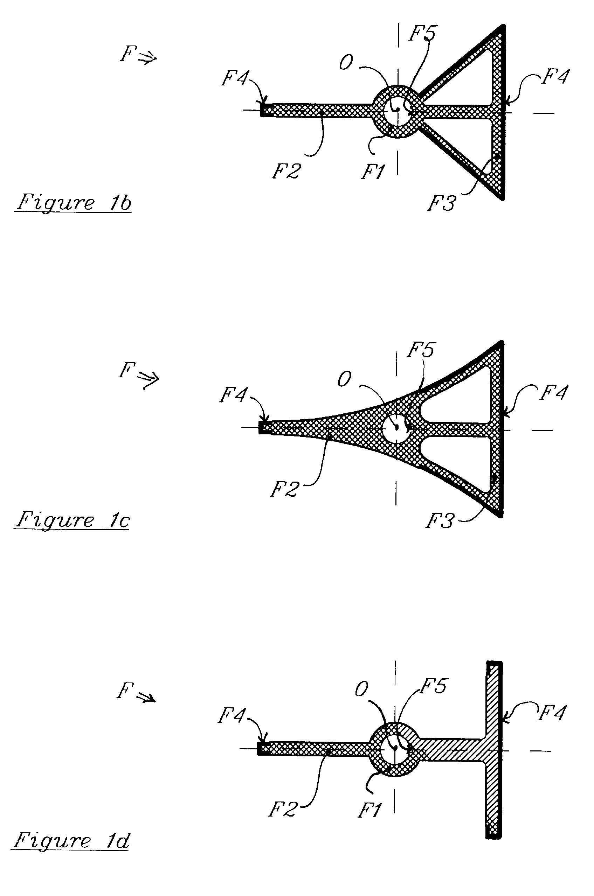

Figure 6 shows a scheme of the washing phase of the purification filter (D). A part of the liquid is taken from the basin (V) and convoyed by mean of the same pump (P) to said five-way valve (X) which deviates the liquid towards the outlet (Du) of the purification filter (D) generating a counterflow in the filtering elements of the purification filter (D). From the entry (Di) of the purification filter (D) the liquid, bearing the impurities held by the purification filter (D), returns to the five-way valve (X) in order to be deviated, this time, towards the discharged line (S). In this kind of implementation it is possible to provide for the discharge of the dirty liquid towards the discharged line (S) or a container. In that event, a further valve (Y), positioned between the five-way valve (X) and the duct bringing the liquid to the basin (V), conveys the liquid just filtered towards the discharged line (S). The shape of the butterfly device (F) can change, for example it can be T shaped or have curved surfaces in order to improve the flow of the liquid. In any case said butterfly device (F) must be asymmetric, with a linear side and the terminal part of the other opposite side wide enough to close one of the ducts (Fig. 1b, 1c, 1d).

The above are the basic outlines of the invention, on the basis of which the technician will be able to provide for implementation; therefore, any change which may be necessary upon implementation is to be regarded as completely protected by the present invention.

With reference to the above description and the attached drawings, the following claims are put forth.

## Claims

1. Valve with rotating butterfly device characterised in that it comprises five deviation ducts wherein two ducts are parallel and adjacent, the third duct is opposed to the adjacent ducts and the other two ducts are orthogonal to the previous ducts.

2. Valve with rotating butterfly device according to claim 1, characterised in that the orthogonal ducts are reciprocally lined up and close to the single duct.

3. Valve with rotating butterfly device according to claims 1, 2, characterised in that the butterfly device closes one of the two adjacent ducts and positions the other part of said butterfly device between the opposite duct and the lateral orthogonal duct which is opposed to the closed duct.

4. Valve with rotating butterfly device according to claims 1, 2, 3, characterised in that the rotating butterfly device consists of a cylindrical central part, a bulkhead including a linear radial part and a triangular part whose vertex is oriented to the centre (Fig. 1a) and wherein the ends and the edges of the butterfly device are in contact with the inner surface of the body of the valve and are conformed to and/or covered by a suitable material so as to preserve the seal of said ends and edges from the leakage of fluids.

5. Valve with rotating butterfly device according to claims 1, 2, 3, characterised in that the rotating butterfly device consists of a cylindrical central part, a bulkhead including a linear radial part and a T shaped part oriented to the centre (Fig. 1a) and wherein the ends and the edges of the butterfly device are in contact with the inner surface of the body of the valve and are conformed to and/or covered by a suitable material so as to preserve the seal of said ends and edges from the leakage of fluids.

6. Valve with rotating butterfly device according to claims 1, 2, 3, characterised in that the rotating butterfly device consists of a cylindrical central part, and a bulkhead including two curved and divergent parts and wherein the ends and the edges of the butterfly device are in contact with the inner surface of the body of the valve and are conformed to and/or covered by a suitable material so as to preserve the seal of said ends and edges from the leakage of fluids.

7. Valve with rotating butterfly device characterised in that the butterfly device lodges in the inner cylindrical seat of the body of the new valve and consists of two parallel plates. Between said plates there is a baffle, which form a single unit with the butterfly device, provided with a central circular part, a linear radial part and a triangular part whose vertex is orientated to the centre of the circular part and lined up to the linear part.

8. Valve with rotating butterfly device according to claim 7, characterised in that, essentially, the diameter of said plates equals the inner diameter of the valve.

9. Valve with rotating butterfly device according to claim 8, characterised in that, the triangular part is provided with a lateral wall and a wall apposite to the centre of rotation of the butterfly device which is endowed with holes and wherein, on the wall of the triangular part opposite to the centre of rotation, an elastic stopper with arcuate shape is applied and said stopper adheres to the inner surface of the seat of rotation of the butterfly device and wherein the liquid, flowing through the valve, fills the space between the stopper and the holed wall.

10. Valve with rotating butterfly device according to claim 9, characterised in that, it is provided with some baffles or walls on the wall of the triangular part opposite to centre of rotation which are turned and connected to said elastic stopper in order to keep it orienting towards the cylindrical surface.
